# FASCICULE DE BREVET EUROPEEN

(11) **EP 0 797 705 B1**
(45) Date de publication et mention de la délivrance du brevet: **29.12.1999**
(21) Numéro de dépôt: 95942755.0
(22) Date de dépôt: 15.12.1995
(51) Int. Cl.: D21H 27/40, B31F 1/07, B32B 3/28, B31D 1/04

(54) **PAPIER ABSORBANT GAUFRE A MOTIFS COMBINES**
ABSORBIERENDES PAPIER MIT GEPRÄGTEN MOTIVEN
EMBOSSED ABSORBENT PAPER HAVING COMBINED PATTERNS

(30) Priorité: 16.12.1994 FR 9415196
(43) Date de publication de la demande: 01.10.1997
(73) Titulaire: FORT JAMES FRANCE, 68320 Kunheim (FR)
(72) Inventeur: LAURENT, Pierre, F-68000 Colmar (FR); LEFEBVRE DU GROSRIEZ, Carol, F-68000 Colmar (FR); ROUSSEL, Gilles, F-68000 Colmar (FR); RUPPEL, Rémy, F-68320 Durrenentzen (FR)
(74) Mandataire: David, Daniel
(86) Numéro de dépôt international: FR9501681
(87) Numéro de publication internationale: WO9618771

(56) Documents cités:
- GB-A- 2 132 141
- GB-A- 2 255 745
- US-A- 4 320 162
- US-A- 4 376 671
- US-A- 5 328 565

## Description

La présente invention concerne le domaine des papiers absorbants à usage sanitaire et domestique, et vise une feuille stratifiée pour des produits tels que papier toilette, mouchoirs, serviettes ou chiffons d'essuyage.

Dans l'industrie du papier sanitaire et domestique, on utilise pour la réalisation des produits un papier absorbant crêpé désigné par ouate de cellulose. On profite de sa capacité d'allongement conférée par le crêpage pour le gaufrer; c'est-à-dire déformer la feuille par endroits de façon permanente, et obtenir notamment des protubérances sur une face de la feuille.

En effet, la tendance de ces dernières années, en ce qui concerne les produits d'hygiène, a été de les rendre plus doux, plus moelleux, plus attrayants tout en maintenant ou améliorant leurs caractéristiques fonctionnelles d'épaisseur et de résistances notamment. Ces dernières peuvent être affectées, améliorées ou dégradées, par le processus de gaufrage. L'opération de gaufrage s'effectue soit sur du papier à fort taux d'humidité, c'est-à-dire sur machine à papier en partie humide, soit sur du papier à faible taux d'humidité, c'est-à-dire en transformation en partie sèche. L'invention concerne le gaufrage du papier à faible taux d'humidité.

Les motifs de gaufrage les plus répandus sont constitués d'une répétition, sur une base géométrique, de protubérances élémentaires de faible section transversale et de forme géométrique simple (cf. figure 1). On en trouve un mode de réalisation dans le brevet US 3414459.

Ce genre de motifs, dont la fréquence de répétition des protubérances peut être élevée - densité des éléments allant de 5 à 60 au cm² selon qu'il s'agit d'un essuie-tout ou un papier toilette - et dont la surface des sommets des protubérances élémentaires peut être inférieure à 1 mm², affecte principalement les caractéristiques liées à l'épaisseur de la feuille, d'une part, et à sa rigidité et sa résistance, d'autre part. Ces motifs permettent de réaliser un bon compromis entre les améliorations souhaitées des caractéristiques lorsque l'on transforme le produit semi-fini en produit fini, et les conditions de marche industrielle; ils permettent, notamment, l'application d'une intensité de gaufrage suffisante.

En revanche, de nombreuses études ont montré que ces motifs, que l'on peut qualifier de "techniques", étaient perçus par les consommateurs comme étant visuellement peu attrayants lorsqu'ils étaient notamment à faible densité. Cette perception négative est renforcée par leur très large diffusion qui les rend anonymes.

Des solutions visant à augmenter l'impact visuel de ces produits d'hygiène sans nuire aux propriétés fondamentales du papier ont déjà été développées.

Une solution est d'imprimer des motifs décoratifs avant ou après les opérations de gaufrage. Elle a l'avantage de peu modifier les apports du gaufrage et de renforcer la visibilité du produit. Elle présente cependant l'inconvénient de positionner le produit sur le marché des produits colorés et décorés alors que les consommateurs sont majoritairement favorables à l'uni. Elle nécessite par ailleurs des investissements supplémentaires et constitue parfois un facteur pénalisant le rendement de la ligne de fabrication.

Une autre solution de l'art antérieur a consisté à proposer, à côté de l'immense majorité des motifs "techniques", des motifs de gaufrage privilégiant l'aspect visuel. Ces motifs présentent une fréquence de répétition beaucoup plus faible par rapport aux motifs précédents et une surface unitaire d'un ordre de grandeur supérieur. La figure 2 en illustre un exemple correspondant à l'enseignement du brevet EP 265298.

L'impact de ces motifs sur les caractéristiques physiques du papier est plus faible; la rigidité et l'épaisseur de la feuille sont peu altérées. Leur atout essentiel est la signature ou au moins la possibilité de différentiation qu'ils procurent. En revanche, cet avantage majeur est directement lié à leur lisibilité ou visibilité.

Or, pour atteindre cet objectif d'attraction visuelle, deux approches possibles sont a priori identifiables. La première consiste à appliquer une intensité de gaufrage importante pour assurer un bon marquage, la seconde à se limiter à des motifs donnant un bon gaufrage dans les conditions usuelles de transformation. Dans l'art antérieur, ces deux approches ont été nécessairement mises en oeuvre simultanément.

En effet, plus on met l'accent sur la valeur visuelle moins les formes sont géométriquement simples. Il s'ensuit un moindre pouvoir marquant sur la feuille et l'empreinte obtenue est moins régulière. En conséquence, il est nécessaire d'augmenter l'intensité du gaufrage si l'on veut affecter, dans la mesure souhaitée, les caractéristiques du produit. Ce faisant, on amplifie les défauts inhérents à ce genre de motif vis-à-vis de la régularité du processus de gaufrage, et, donc, du comportement de la nappe à la fois localement et globalement. Cela se traduit localement par une dégradation de l'aspect du produit, et globalement par une limitation des performances du processus de gaufrage en termes de dimensions, de vitesse, et plus généralement de rendement.

On explique ainsi la nécessité d'un compromis, pour ces motifs, entre l'intensité de leur marquage et leur exploitation sur une échelle industrielle, qui s'effectue au détriment de leur lisibilité et visibilité, et de l'amélioration attendue des caractéristiques résultant de la transformation des produits semi-finis en produits finis. Dans la pratique, l'arbitrage est nécessairement fait en faveur des contraintes liées à l'élaboration du produit d'hygiène, en reléguant au second plan les contraintes de valeur esthétique.

Ces motifs, que l'on peut qualifier de "technico-esthétiques", de ce fait, présentent une fréquence de répétition assez importante, une forme relativement compacte et fermée, et utilisent des formes géométriques simples, au besoin assemblées pour constituer un motif élémentaire qui est répété indéfiniment sens marche et sens travers et dont l'orientation est toujours la même. Enfin pour un motif réalisé selon l'enseignement du brevet EP 265298, on note l'uniformité de l'épaisseur des traits formant le contour des éléments.

Une autre solution de l'art antérieur a consisté à définir préalablement un motif "technique" et à dégager des zones régulièrement espacées, généralement géométriques, en supprimant des picots à ce motif. Ces zones sont alors soit laissées telles quelles, soit ornées d'un motif esthétique. On y a également associé parfois un motif imprimé, mais cela l'a été au détriment de la visibilité et donc de la lisibilité de l'élément visuel du motif.

Ces associations visent essentiellement à moduler, sur la base des motifs "techniques", les facteurs fonctionnels d'épaisseur, de résistance et de douceur à l'exemple du brevet US 4320162 ou US-A-4 376 671. Ce brevet porte sur une combinaison de deux motifs, à double profondeur : le premier motif aux éléments relativement espacés les uns des autres ayant une profondeur importante, le second une profondeur moindre. Sur l'illustration donnée dans ce brevet, le premier motif est arbitrairement symbolisé par une fleur, le second est classiquement identifié par des picots. Les caractéristiques essentielles décrites ci-dessus pour les motifs "technico-esthétiques", en particulier l'orientation quasi-constante des motifs primaires, sont conservées dans ces types de combinaison.

Aucune de ces solutions ne permet de jouer pleinement sur le potentiel offert par des motifs esthétiques vis-à-vis du consommateur final.

En effet, il est reconnu qu'il est possible de véhiculer des systèmes de valeurs (positives ou négatives) par l'emploi judicieux de formes, mouvements, directions (à l'exemple des logos). De nombreuses études ont d'ailleurs mis en évidence un phénomène de "halo" induit par une perception particulièrement positive d'une caractéristique du produit par le consommateur, et diminuant ou masquant par ailleurs la perception de ses éventuels points faibles.

Dans l'art antérieur, l'application de tels principes à des motifs de gaufrage était impossible.

La raison majeur en est que leurs caractéristiques essentielles de liberté, mouvement, visibilité et lisibilité sont, dans une grande mesure, incompatibles avec les contraintes liées à la fonction et à la production des produits d'hygiène (épaisseur, comportement régulier de la nappe, aspect du produit, vitesse et rendement de production).

L'incompatibilité est d'ailleurs d'autant plus marquée que ces caractéristiques essentielles sont renforcées par la forte intensité de gaufrage nécessaire pour atteindre des objectifs minimaux de rentabilité économique en raison du très faible pouvoir gaufrant de tels motifs libres.

L'invention se propose de résoudre ce problème.

Le papier gaufré conforme à l'invention, notamment pour papier hygiénique, constitué d'au moins un pli de papier absorbant crêpé, de grammage compris entre 12 et 35g/m², présentant des premières et des deuxièmes protubérances, disposées respectivement selon un premier et un deuxième motif, le premier motif étant composé d'éléments de motif relativement espacés les uns des autres, chacun étant constitué d'au moins une desdites premières protubérances et le deuxième motif, dit de fond, comprenant lesdites deuxièmes protubérances disposées de façon plus serrée entre lesdits éléments de motif, est caractérisé en ce que les éléments de motif forment un premier motif dit graphique en étant répartis à raison d'au plus 0,5 élément par cm², les premières protubérances les constituant présentant à leur sommet une surface de forme linéaire dont la largeur est comprise entre 0,1 et 2 mm, et en ce que les deuxièmes protubérances sont disposées à raison d'au moins 30 au cm², de préférence 40 au cm², assurant l'essentiel des caractéristiques fonctionnelles liées au gaufrage.

Grâce à l'invention, on obtient une structure de gaufrage combinée offrant les avantages résultant de l'utilisation,
d'un motif graphique, c'est-à-dire dont le choix des éléments est libre, sans contrainte liée à la recherche d'une augmentation de l'épaisseur ou de l'absorption par le gaufrage, ce choix pouvant ainsi avoir pour seul objectif la recherche d'un pouvoir attrayant et évocateur,
avec un motif de fond assurant les apports techniques du gaufrage à savoir en particulier, épaisseur et absorption.

Par rapport à la réalisation présentée sur les figures du brevet US 4376671, la structure de gaufrage de l'invention, par la densité élevée des protubérances du motif de fond, confère par ailleurs un aspect textile, agréable à l'oeil. Les deuxièmes protubérances, n'étant pas aisément visibles individuellement à l'oeil nu en raison de leur nécessaire petite taille, leur surface au sommet étant inférieure à 1 mm², font ressortir en conséquence le motif principal. Ce contraste résulte, plus particulièrement, du rapport élevé entre la surface d'un élément de motif graphique et celle d'une deuxième protubérance, ce rapport étant conformément à une autre caractéristique de l'invention supérieur à 50 et de préférence supérieur à 100, d'une part, et de leur nombre élevé par unité de surface, d'autre part.

Selon une autre caractéristique de l'invention, les éléments de motif graphique sont répartis à raison d'au plus 0,2 élément par cm². Ainsi on améliore encore l'effet de contraste.

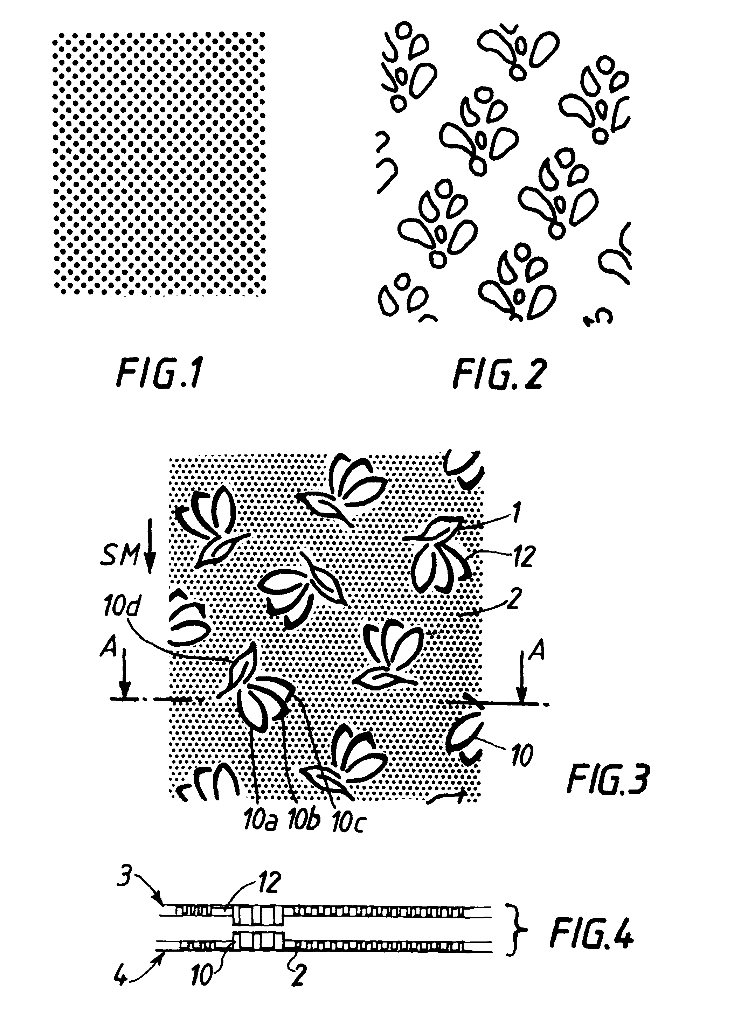

Selon une autre caractéristique de l'invention, la largeur de ladite surface de forme linéaire n'est pas uniforme à l'intérieur d'un même élément de motif graphique. Contrairement aux motifs "technico-esthétiques" de l'art antérieur, dont un exemple est représenté sur la figure 2, en s'affranchissant des contraintes techniques du motif, le choix du motif devient beaucoup plus libre permettant l'accès à des formes ayant une force d'appel pour le consommateur ou un attrait supérieur. Par surface de forme linéaire, on comprend une surface dont le rapport de la longueur, c'est-à-dire la longueur du chemin le plus direct à l'intérieur de cette surface entre deux points les plus éloignés, sur la largeur, c'est-à-dire la distance moyenne entre deux points quelconques pris de part et d'autre de ce chemin, est supérieur à 1. Il est, en fait, le plus souvent élevé. Le long d'un chemin mentionné ci-dessus la largeur peut ainsi varier. Elle est au minimum de 0,1 mm et au maximum de 2 mm. Par exemple, si un élément de motif représente une lettre de l'alphabet, la largeur pourra varier de la même façon que les pleins et les déliés d'une écriture calligraphiée.

Selon une autre caractéristique de l'invention, la deuxième protubérance la plus proche de l'élément de motif graphique est située à une distance de ce dernier au moins égale à la distance séparant deux deuxièmes éléments adjacents. On améliore ainsi encore le contraste entre les deux motifs.

Selon une autre caractéristique, la feuille de papier peut être constituée d'au moins deux plis dont l'un au moins est gaufré conformément à l'invention.

Selon une autre caractéristique, les premières protubérances sont prévues sur une face de la feuille de papier et les secondes protubérances sur l'autre face.

Selon une autre caractéristique la feuille de papier est constituée d'au moins deux plis gaufrés ensemble.

Selon une autre caractéristique l'invention vise en particulier une feuille stratifiée composée d'au moins deux plis de papier qui ont été gaufrés séparément avant leur association. Ainsi la feuille de papier stratifiée conforme à l'invention, notamment pour papier hygiénique, constitué d'au moins deux plis de papier absorbant crêpé de grammage compris entre 12 et 25 g/m², présentant chacun sur la face tournée vers l'intérieur du stratifié, des premières et des deuxièmes protubérances disposées respectivement selon un premier et deuxième motif, le premier motif étant composé d'éléments de motif relativement espacés les uns des autres, chacun étant constitué desdites premières protubérances et le deuxième motif, dit de fond, comprenant lesdites premières protubérances disposées de façon plus serrée entre lesdits éléments de motif, est caractérisée en ce que les éléments de motif forment un motif graphique en étant répartis à raison d'au plus 0,5 élément par cm², les premières protubérances les constituant présentant à leur sommet une surface de forme linéaire dont la largeur est comprise entre 0,1 et 2 mm, et les deuxièmes protubérances sont disposées à raison d'au moins 40 au cm². En particulier, le rapport de la surface d'un élément de motif à celle d'une deuxième protubérance est supérieur à 50.

Selon une autre caractéristique de l'invention, la hauteur des deuxièmes protubérances est différente de celle des premières protubérances, en particulier elle est inférieure. La différence de hauteur entre elles reste de préférence inférieure à 0,3 mm. Grâce à cette caractéristique, il est possible d'associer les deux feuilles selon les seules protubérances faisant saillie par rapport aux autres dont la hauteur est plus faible. En effet l'applicateur de colle constitué le plus souvent par un cylindre monté en parallèle aux cylindres du gaufreur vient au contact des seules parties en saillie. Il en est de même avec une application par pulvérisation. La liaison s'effectue uniquement par les éléments en saillie. On réduit de la sorte la surface totale encollée participant à l'association des feuilles. La rigidité induite par cette association s'en trouve limitée.

Selon une autre caractéristique de l'invention, la hauteur des deuxièmes protubérances est inférieure à 0,5 mm.

D'autres caractéristiques et avantages apparaîtront à la lecture de la description qui suit d'un mode de réalisation non limitatif de l'invention, accompagnée de dessins annexés sur lesquels :
- les figures 1 et 2 représentent des produits gaufrés selon des motifs de l'art antérieur,
- la figure 3 représente un premier exemple de motif conforme à la présente invention,
- la figure 4 représente une vue en coupe selon AA de la figure 3,
- la figure 5 représente un deuxième mode de réalisation de motif conforme à l'invention,
- la figure 6 est une représentation schématique d'une installation de gaufrage susceptible d'être utilisée pour réaliser un produit dont le motif de gaufrage est conforme à l'invention.
- la figure 7 représente un troisième mode de réalisation de motif conforme à l'invention.
- la figure 8 représente un détail agrandi de la surface d'un cylindre de gaufrage;

Ainsi que cela a été mentionné dans le préambule, la figure 1 représente une vue de dessus d'un papier absorbant, tel qu'un essuie-tout ou un papier toilette, que l'on trouve communément dans le commerce. Les plis constituant la feuille sont liés entre eux par l'intermédiaire des protubérances portées par chacun des plis et tournées vers l'intérieur de la feuille. Un tel assemblage est connu par exemple du brevet US 3414459 pour une association du type pointe/pointe - les deux plis sont collés entre eux par les sommets de leurs protubérances - ou bien du brevet US 3867225 pour une association du type où elles sont emboîtées et où les protubérances d'un pli sont disposées entre les protubérances de l'autre pli, et la liaison réalisée par les sommets des protubérances de l'un avec les parties non gaufrées de l'autre. Dans le cas de la réalisation de la figure 1, ces protubérances sont en forme de pointes avec une section transversale circulaire, ovale ou polygonale. Le nombre de protubérances par unité de surface est fonction de l'épaisseur que l'on veut pour le produit. Un essuie-tout pour lequel une grande absorption est recherchée, présentera, par exemple, 10 protubérances par cm² réparties uniformément.

La figure 2 représente une réalisation de l'art antérieur avec un motif "technico-esthétique" du type décrit dans le brevet EP 265298 pour un papier toilette commercialisé par la Demanderesse sous la marque "Lotus Petite Fleur". Chaque élément de motif représente une fleur, et est défini par une pluralité de protubérances élémentaires en forme d'empreintes linéaires fermées. L'épaisseur du trait est faible : de l'ordre de 1 mm. Les deux plis sont associés l'un à l'autre selon la disposition pointe/pointe. Le choix du motif est malgré tout relativement limité car dans ces réalisations on a souhaité faire jouer à cette forme un rôle fonctionnel et non simplement décoratif, en faisant en sorte que le motif puisse être gaufré intensément dans le but de procurer le maximum de volume. Ainsi que cela est décrit dans le brevet US 4320162, il est possible également de prévoir des protubérances de moindre hauteur entre les motifs élémentaires de façon à charpenter la feuille est à réduire son écrasement.

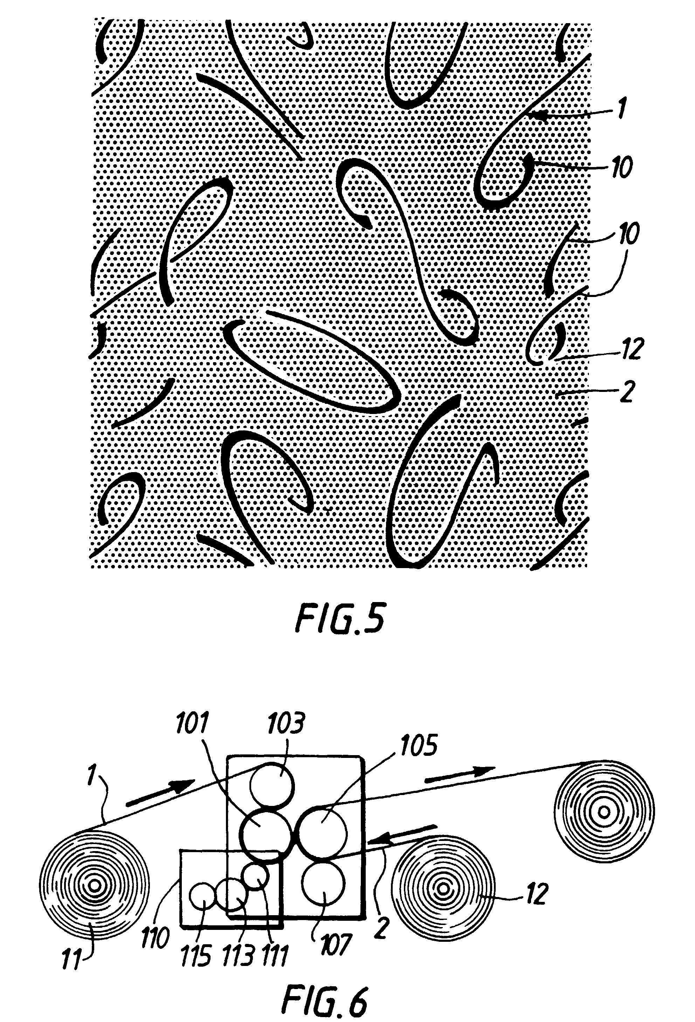

Sur les figures 3 et 5, on a représenté des produits de l'invention, vus de dessus. Les éléments de motif 1 du motif principal graphique sont constitués de premières protubérances 10 de forme allongée se combinant entre elles de façon à représenter une fleur dans l'exemple de la figure 3 - avec les protubérances 10a, 10b, 10c, 10d - et des lettres sur la figure 5 D'autres motifs sont bien sûr possibles tels que des plumes pour évoquer douceur et souplesse. Ces protubérances ont une largeur comprise entre 0,1 et 2 mm. Celle-ci n'est pas constante. Elle reproduit des pleins et des déliés. En outre les éléments de motif sont orientés par rapport au sens marche SM selon des directions différentes. On note sur les figures 3 et 5 que les directions des éléments de motif représentés sont toutes différentes. En prenant parti de ne pas attribuer à ces éléments de motif la fonction de conférer de l'épaisseur à la feuille, on peut ainsi choisir un dessin beaucoup plus librement. Il suffit que l'empreinte laissée par le cylindre de gaufrage sur ce papier soit lisible. On peut régler l'intensité de la pression, appliquée par le cylindre caoutchouc pour réaliser le gaufrage, à une valeur bien inférieure à la valeur maximale susceptible d'être atteinte quand on cherche à donner de l'épaisseur à la feuille. Cette dernière, étant alors moins sollicitée et soumise à de faibles contraintes mécaniques, ne formera pas de plis ou ne se déchirera pas malgré l'emploi de protubérances dont le profil présente des points de rebroussement, et dont la répartition des surfaces venant au contact de la feuille n'est pas équilibrée à l'intérieur d'un périmètre dans lequel est inscrit l'élément de motif. Entre ces éléments de motif relativement espacés les uns des autres, avec de préférence au plus un élément pour 5 cm², on a représenté les deuxièmes protubérances 2. Celles-ci ont une forme en pointe, tronconique ou en tronc de pyramide, de hauteur inférieure à 0,5 mm de préférence inférieure à 0,1 mm, à section polygonale, telle qu'un losange, circulaire, ou bien allongée sens marche ou sens travers. En particulier, les protubérances 2 présentent avec les premières protubérances une différence de hauteur d'au moins 0,3 mm. La surface du sommet des pointes est inférieure à 1 mm². Comme on le voit sur la figure, la répartition des deuxièmes protubérances est régulière entre les éléments de motif 1. Dans l'exemple représenté, les protubérances sont réparties en quinconce selon des pas constants, sens marche et sens travers. Leur densité élevée confère à la feuille un aspect textile. Pour obtenir cet effet, il faut que leur nombre soit au moins de 30 au cm² de préférence 40 au cm², en particulier elle pourra être plus élevée, 60 ou 80 cm² pour renforcer cette apparence. En outre, le rapport des surfaces entre un élément de motif 1 et une deuxième protubérance 2 est de préférence supérieur à 50. Un rapport plus élevé, supérieur à 100, accentue encore le contraste. En disposant les deuxièmes protubérances de façon à ménager une zone 12 libre de protubérances entre les éléments de motif et le motif de fond, on accentue le contraste et améliore l'aspect visuel. Pour réaliser cette zone dégagée 12, il suffit de supprimer sur les cylindres gaufreurs les protubérances 2 immédiatement adjacentes aux protubérances 10 des éléments de motif, sur une distance correspondant au minimum au pas du motif de fond, mesuré respectivement sens marche et sens travers.

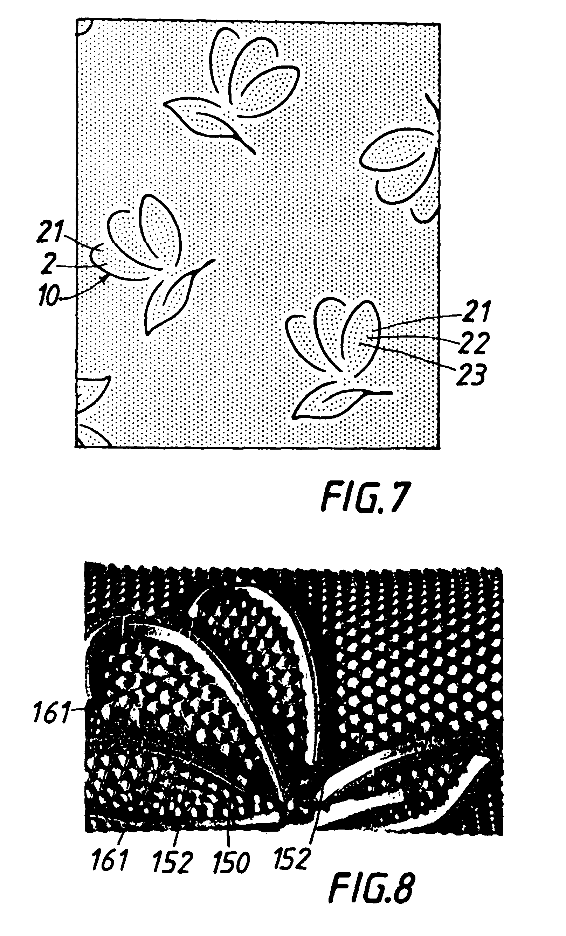

On a représenté sur la figure 7 une autre forme de réalisation de l'invention permettant de renforcer encore la visibilité et la lisibilité des éléments de motif 1. Selon ce mode de réalisation un certain nombre de deuxièmes protubérances 2 situées de préférence à proximité des protubérances 10 sont disposées selon des alignements 21 parallèles aux contours des éléments de motif 1. Par alignement, on entend ici l'ensemble constitué par les protubérances qui sont situées sur une ligne, deux protubérances adjacentes sur cette ligne étant à une distance l'une de l'autre inférieure à la distance les séparant des autres protubérances alentour. La répartition de ces protubérances rompant avec celle, régulière, des protubérances du motif de fond, accentue le tracé des éléments de motif 1, et améliore ainsi leur lisibilité. La distance séparant deux protubérances le long de ces alignements 21 est, de préférence, aussi réduite que possible afin de donner l'impression visuelle d'un trait quasi-continu. Les protubérances étant obtenues par gaufrage sur des cylindres présentant des picots en forme de pointes tronconiques, la distance minimale que l'on pourra réaliser sera celle séparant des picots adjacents dont les bases se touchent. Ces alignements sont disposés d'un seul côté des protubérances 10 ou bien des deux côtés. Il peut y avoir un seul alignement. Mais il est préférable d'en disposer au moins deux. Si l'élément de motif 1 est défini par une ligne fermée comme cela est représenté sur la figure 7, on disposera, de préférence, autant d'alignements que l'espace ainsi défini le permet. Chaque motif de la figure 7 contient trois alignements 21, 22, 23

Dans le cas d'une feuille stratifiée à deux plis, où les deux plis ont été gaufrés séparément avant d'être assemblés, ainsi que cela apparaît sur la figure 4, les premières protubérances sont de préférence plus hautes que les deuxièmes. On peut, de la sorte, aisément lier les deux feuilles par les premières seulement que l'on place en position pointes/pointes. On obtient une feuille stratifiée moins rigide, donc plus agréable au toucher, qu'une feuille collée sur la majorité de ses protubérances. Toutefois il est possible également d'obtenir une liaison entre les feuilles sans trop rigidifier l'ensemble en pulvérisant une faible quantité de colle sur un des plis. Il n'est alors pas nécessaire de prévoir une double hauteur entre les premières et les deuxièmes protubérances. Dans ce cas, chacun des plis aura un grammage compris entre 12 et 25 g/m².

L'invention couvre également une feuille à un pli ou plusieurs plis gaufrés ensemble de façon à présenter l'aspect, par exemple, de la figure 3 mais qui en coupe montre un seul des deux plis de la figure 4.

On décrit ci-après une installation connue en soi qui permet de fabriquer le produit stratifié de l'invention. Sur la figure 5, on a représenté une première paire de cylindres 101, 103 comportant un cylindre métallique gravé 101 à la surface duquel sont implantés des éléments en relief de géométrie correspondant au gaufrage souhaité. Le cylindre métallique est entraîné en rotation autour d'un axe horizontal et est associé à un cylindre en caoutchouc 103 qui lui est parallèle, et avec lequel il ménage un intervalle de serrage 101, 103. En passant dans cet intervalle, une feuille de papier absorbant crêpé, telle que l'ouate de cellulose, subit des déformations mécaniques permanentes en raison de la pression exercée par le caoutchouc sur le papier supporté par les éléments en relief du cylindre rigide ; il en épouse alors la forme. Selon l'intensité du gaufrage, le papier pénètre plus ou moins loin dans les espaces ménagés entre les éléments en relief.

Pour la réalisation du gaufrage souhaité, les éléments en relief sont répartis selon deux motifs : un premier motif avec les premières protubérances qui définissent elles-mêmes des éléments de motif 1, et un deuxième motif avec les deuxièmes protubérances .

L'installation comporte une deuxième paire de cylindres de gaufrage avec un cylindre métallique 105 de même diamètre, et tournant dans le même plan horizontal que le cylindre 101 ; il coopère avec un cylindre en caoutchouc 107 pour le gaufrage.

Les cylindres 101 et 105 ménagent entre eux un intervalle de serrage 101-105 et sont entraînés à des vitesses de rotation opposées, synchrones, de manière à rouler l'un sur l'autre sans glissement.

L'installation comprend également un système d'encollage 110 avec cylindre applicateur 111 en caoutchouc ou autre matériau équivalent, venant en appui sur le cylindre 101 en amont de l'intervalle de serrage 101-105. Un cylindre de transfert 113 transfère l'adhésif depuis un cylindre plongeur 115 sur le cylindre applicateur 111. Le cylindre plongeur 115 prélève la colle dans un bac non représenté.

Les feuilles de papier à associer sont alimentées depuis les bobines 21, 22. La feuille 1 est guidée autour du cylindre en caoutchouc 103 et passe dans l'intervalle 101-103 dont elle ressort gaufrée, en épousant la surface en relief du cylindre métallique 101. Le cylindre applicateur 111 dépose la colle, en quantité dosée, sur la surface de protubérances de la feuille, formant méplats.

La deuxième feuille 2 subit un traitement analogue par passage dans l'intervalle 105-107, puis est associée à la feuille 1 dans l'intervalle 101-105. La feuille stratifiée qui en résulte est ensuite transformée en produit fini.

Dans le cas d'une feuille à un pli ou plusieurs plis gaufrés ensemble, on conserve évidemment, seulement une paire de cylindres 101, 103.

On a représenté sur la figure 8 une portion de la surface de l'un des cylindres gaufreurs, 101 ou 105, avec des premiers éléments en relief 150. La forme de ces derniers est allongée. Ils présentent un méplat au sommet dont la largeur n'est pas constante quand on déplace le long de l'élément. Elle est au minimum de 0.1 mm et au maximum de 2 mm. En revanche la hauteur depuis le fond de la gravure est sensiblement constante. De part et d'autre des éléments 150, sont disposés des seconds éléments en relief 152 en forme de tronc de cône ou de pyramide avec un méplat au sommet en forme de cercle de petite dimension, 1 mm². Par rapport au sommet des éléments 150, leur niveau est inférieur. La différence de niveau entre eux est de l'ordre de 0,3 mm. Sur un côté des premières protubérances 150, on observe que les seconds éléments en relief 152 sont disposés selon des alignements 161 parallèles à la courbure de l'élément 150. La distance séparant l'alignement 161 de l'élément 150 est déterminée en fonction de la largeur moyenne de l'élément 150.

Lors de l'opération de gaufrage, la feuille d'ouate de cellulose est pressée au moyen d'un cylindre à revêtement déformable tel que le caoutchouc sur ces éléments en relief dont elle épouse la forme. En raison de la faible hauteur de gravure du motif combiné et de la présence du motif de fond, la feuille n'est pas soumise à de trop fortes contraintes au niveau du motif graphique.

## Revendications

1. Feuille de papier gaufré, notamment pour papier hygiénique, constituée d'au moins un pli de papier absorbant crêpé, de grammage compris entre 12 et 35 g/m², présentant des premières (10) et des deuxièmes (2) protubérances, disposées respectivement selon un premier et un deuxième motif, le premier motif étant composé d'éléments de motif (1) chacun constitué d'au moins une desdites premières protubérances (10) et étant relativement espacés les uns des autres, et le deuxième motif, dit de fond, comprenant lesdites deuxièmes protubérances (2) disposées de façon plus serrée entre lesdits éléments de motif (1), caractérisée en ce que les éléments de motif (1) forment un motif dit graphique en étant répartis à raison d'au plus 0,5 élément par cm², les premières protubérances (10) les constituant présentant à leur sommet une surface de forme linéaire dont la largeur est comprise entre 0,1 et 2 mm, et les deuxièmes protubérances (2) sont disposées à raison d'au moins 30 au cm², de préférence 40, et assurent l'essentiel des caractéristiques fonctionnelles..

2. Feuille de papier selon la revendication 1 caractérisée en ce que le rapport de la surface d'un élément de motif (1) à celle d'une deuxième protubérance (2) est supérieure à 50.

3. Feuille de papier selon la revendication 2, caractérisée en ce que ledit rapport est supérieur à 100.

4. Feuille de papier selon l'une des revendications 1 à 3, caractérisée en ce que lesdits éléments de motif (1) sont répartis à raison d'au plus 0,2 élément par cm².

5. Feuille de papier selon l'une des revendications 1 à 4, caractérisée en ce que la largeur de ladite surface de forme linéaire n'est pas constante à l'intérieur d'un même élément de motif (1).

6. Feuille de papier selon l'une des revendications 1 à 5, caractérisée en ce que la distance séparant une deuxième protubérance (2) d'une première protubérance (10) d'un élément de motif (1) est au moins égale à la distance séparant deux deuxièmes protubérances (2) adjacentes du deuxième motif.

7. Feuille de papier selon la revendication 1 à 6, caractérisée en ce qu'au moins une partie des deuxièmes protubérances (2) situées à proximité d'une première protubérance (10) sont disposées selon au moins un alignement (21) parallèle à cette dernière (10).

8. Feuille de papier selon la revendication 7 dont les éléments de motif (1) définissent des surfaces fermées caractérisée en ce que ledit alignement (21) est situé à l'intérieur de l'élément de motif.

9. Feuille de papier selon l'une des revendications précédentes, caractérisées en ce que les premières protubérances (10) sont prévues sur une face de ladite feuille et les secondes protubérances (2) sur l'autre face.

10. Feuille de papier stratifiée, notamment pour papier hygiénique, constituée d'au moins deux plis (3,4) de papier absorbant crêpé de grammage compris entre 12 et 25 g/m², présentant chacun sur une face des premières et des deuxièmes protubérances (10,2) disposées respectivement selon un premier et un deuxième motif, lesdites faces étant tournées vers l'intérieur du stratifié, le premier motif étant composé d'éléments de motif (1) chacun constitué desdites premières protubérances (10) et étant relativement espacés les uns des autres, et le deuxième motif, dit de fond, comprenant lesdites deuxièmes protubérances (2) disposées de façon plus serrée entre lesdits éléments de motif (1), caractérisée en ce qu'au moins l'un des plis est réalisé conformément à l'une des revendications 1 à 9

11. Feuille de papier stratifiée selon la revendication 10, caractérisée en ce que la hauteur des deuxièmes protubérances (2) est différente de celle des premières protubérances (10), la différence de hauteur entre elles restant de préférence inférieure à 0,3 mm.

12. Feuille de papier stratifiée selon la revendication 11, caractérisée en ce que la hauteur des deuxièmes protubérances (2) est inférieure à celle des premières protubérances (10).

13. Feuille de papier stratifiée selon l'une des revendications 11 et 12, caractérisée en ce que les deux plis (3 et 4) sont liés entre eux par collage, par les sommets des premières protubérances (10).

14. Feuille de papier stratifiée selon l'une des revendications 10 à 13, caractérisée en ce que la hauteur des deuxièmes protubérances (2) est inférieure à 0,5 mm.

15. Feuille de papier stratifiée, notamment pour papier hygiénique, constituée d'au moins deux plis de papier gaufré absorbant crêpé, de grammage compris entre 12 et 25 g/m², placés l'un sur l'autre, présentant chacun sur une face des premières et des deuxièmes protubérances, lesdites faces étant tournées vers l'intérieur de la feuille stratifiée, disposées respectivement selon un premier et un deuxième motif, le premier motif étant composé d'éléments de motif chacun constitué d'au moins une desdites premières protubérances et étant relativement espacés les uns des autres, et le deuxième motif, dit de fond, comprenant lesdites deuxièmes protubérances disposées de façon plus serrée entre lesdits éléments de motif, caractérisée en ce que les éléments de motif forment un motif dit graphique en étant répartis sur la surface des feuilles à raison d'au plus 0,5 élément par cm², les premières protubérances les constituant présentant à leur sommet une surface de forme linéaire dont la largeur est comprise entre 0,1 et 2 mm, et les deuxièmes protubérances sont disposées à raison d'au moins 30 au cm², de préférence 40, et assurent l'essentiel des caractéristiques fonctionnelles.

## Patentansprüche

1. Papierblatt aus geprägtem Papier, insbesondere für Toilettenpapier, aus mindestens einer Lage gekrepptem, absorbierendem Papier mit einer Flächenmasse zwischen 12 und 35 g/m², das erste (10) und zweite (2) Vorsprünge aufweist, die gemäß einem ersten bzw. einem zweiten Motiv angeordnet sind, wobei das erste Motiv aus Motivelementen (1) zusammengesetzt ist, von denen jedes aus mindestens einem der ersten Vorsprünge (10) besteht, und die Motivelemente in einem relativ großen Abstand voneinander angeordnet sind, und das zweite Motiv, das sogenannte Grundmotiv, die zweiten Vorsprünge (2) aufweist, die in kleinerem Abstand zwischen den Motivelementen (1) angeordnet sind, dadurch gekennzeichnet, daß die Motivelemente (1) ein sogenanntes graphisches Motiv bilden, wobei sie mit einer Dichte von höchstens 0,5 Elementen pro cm² verteilt sind, die ersten Vorsprünge (10), aus denen sie bestehen, auf ihrer Kuppe eine Oberfläche von linearer Form bilden, deren Breite zwischen 0,1 und 2 mm liegt, und die zweiten Vorsprünge (2) mit einer Dichte von mindestens 30, vorzugsweise 40, pro cm² angeordnet sind, und das Wesentliche der funktionalen Merkmale bilden.

2. Papierblatt gemäß Anspruch 1, dadurch gekennzeichnet, daß das Verhältnis der Oberfläche eines Motivelements (1) zu derjenigen eines zweiten Vorsprungs (2) größer als 50 ist.

3. Papierblatt gemäß Anspruch 2, dadurch gekennzeichnet, daß das Verhältnis größer als 100 ist.

4. Papierblatt gemäß deinem der Ansprüche 1 bis 3, dadurch gekennzeichnet, daß die Motivelemente (1) mit einer Dichte von höchstens 0,2 Elementen pro cm² verteilt sind.

5. Papierblatt gemäß einem der Ansprüche 1 bis 4, dadurch gekennzeichnet, daß die Breite der Oberfläche von linearer Form innerhalb eines selben Motivelements (1) nicht konstant ist.

6. Papierblatt gemäß einem der Ansprüche 1 bis 5, dadurch gekennzeichnet, daß der Abstand, der einen zweiten Vorsprung (2) von einem ersten Vorsprung (10) eines Motivelements (1) trennt, mindestens gleich dem Abstand ist, der zwei benachbarte zweite Vorsprünge (2) des zweiten Motivs trennt.

7. Papierblatt gemäß einem der Ansprüche 1 bis 6, dadurch gekennzeichnet, daß mindestens ein Teil der in der Nähe eines ersten Vorsprungs (10) gelegenen zweiten Vorsprünge (2) gemäß mindestens einer zu diesem Vorsprung (10) parallelen Anordnung (21) angeordnet ist.

8. Papierblatt gemäß Anspruch 7, dessen Motivelemente (1) geschlossene Oberflächen bilden, dadurch gekennzeichnet, daß die Anordnung (21) innerhalb des Motivelements gelegen ist.

9. Papierblatt gemäß einem der vorhergehenden Ansprüche, dadurch gekennzeichnet, daß die ersten Vorsprünge (10) auf einer Seite des Blattes, und die zweiten Vorsprünge (2) auf der anderen Seite vorgesehen sind.

10. Geschichtetes Papierblatt, insbesondere für Toilettenpapier, aus mindestens zwei Lagen (3, 4) gekrepptem, absorbierendem Papier mit einer Flächenmasse zwischen 12 und 25 g/m², von denen jede auf einer Seite erste und zweite Vorsprünge (10, 2) aufweist, die gemäß einem ersten bzw. einem zweiten Motiv angeordnet sind, wobei die Seiten nach dem Inneren des geschichteten Blattes gerichtet sind, wobei das erste Motiv aus Motivelementen (1) zusammengesetzt ist, von denen jedes aus den ersten Vorsprüngen (10) besteht, und die Motivelemente in einem relativ großen Abstand voneinander angeordnet sind, und das zweite Motiv, das sogenannte Grundmotiv, die zweiten Vorsprünge (2) aufweist, die in kleinerem Abstand zwischen den Motivelementen (1) angeordnet sind, dadurch gekennzeichnet, daß mindestens eine der Lagen gemäß irgendeinem der Ansprüche 1 bis 9 verwirklicht ist.

11. Geschichtetes Papierblatt gemäß Anspruch 10, dadurch gekennzeichnet, daß die Höhe der zweiten Vorsprünge (2) verschieden von derjenigen der ersten Vorsprünge (10) ist, wobei die Höhendifferenz vorzugsweise unter 0,3 mm bleibt.

12. Geschichtetes Papierblatt gemäß Anspruch 11, dadurch gekennzeichnet, daß die Höhe der zweiten Vorsprünge (2) kleiner als diejenige der ersten Vorsprünge (10) ist.

13. Geschichtetes Papierblatt gemäß einem der Ansprüche 11 und 12, dadurch gekennzeichnet, daß die zwei Lagen (3 und 4) über die Kuppen der ersten Vorsprünge (10) durch Kleben miteinander verbunden sind.

14. Geschichtetes Papierblatt gemäß einem der Ansprüche 10 bis 13, dadurch gekennzeichnet, daß die Höhe der zweiten Vorsprünge (2) kleiner als 0,5 mm ist.

15. Geschichtetes Papierblatt, insbesondere für Toilettenpapier, aus mindestens zwei aufeinandergelegten Lagen gekrepptem, absorbierendem, geprägtem Papier mit einer Flächenmasse zwischen 12 und 25 g/m², von denen jede auf einer Seite erste und zweite Vorsprünge aufweist, wobei die Seiten nach dem Inneren des geschichteten Blattes gerichtet sind, und die Vorsprünge gemäß einem ersten bzw. einem zweiten Motiv angeordnet sind, wobei das erste Motiv aus Motivelementen zusammengesetzt ist, von denen jedes aus mindestens einem der ersten Vorsprünge besteht, und die Motivelemente in einem relativ großen Abstand voneinander angeordnet sind, und das zweite Motiv, das sogenannte Grundmotiv, die zweiten Vorsprünge aufweist, die in kleinerem Abstand zwischen den Motivelementen angeordnet sind, dadurch gekennzeichnet, daß die Motivelemente ein sogenanntes graphisches Motiv bilden, wobei sie auf der Oberfläche der Blätter mit einer Dichte von höchstens 0,5 Elementen pro cm² verteilt sind, die ersten Vorsprünge, aus denen sie bestehen, auf ihrer Kuppe eine Oberfläche von linearer Form bilden, deren Breite zwischen 0,1 und 2 mm liegt, und die zweiten Vorsprünge mit einer Dichte von mindestens 30, vorzugsweise 40, pro cm² angeordnet sind, und das Wesentliche der funktionalen Merkmale bilden.

## Claims

1. Embossed paper sheet, in particular for toilet paper, consisting of at least one ply of absorbent crepe paper with a basis weight of between 12 and 35 g/m², having first protuberances (10) and second protuberances (2) arranged according to a first and second pattern respectively, the first pattern being composed of pattern elements (1) which each consist of at least one of the said first protuberances (10) and are relatively far apart, and the second pattern, called the background pattern, comprising the said second protuberances (2) arranged closer together between the said pattern elements (1), characterized in that the pattern elements (1) form a pattern called a graphic pattern by being distributed in a concentration of at most 0.5 elements per cm², the first protuberances (10) constituting them having at their summit a surface of linear form with a width of between 0.1 and 2 mm, and the second protuberances (2) are arranged in a concentration of at least 30, preferably 40, per cm², and provide most of the functional features.

2. Paper sheet according to Claim 1, characterized in that the ratio of the area of a pattern element (1) to that of a second protuberance (2) is greater than 50 to 1.

3. Paper sheet according to Claim 2, characterized in that the said ratio is greater than 100 to 1.

4. Paper sheet according to one of Claims 1 to 3, characterized in that the said pattern elements (1) are distributed in a concentration of at most 0.2 elements per cm².

5. Paper sheet according to one of Claims 1 to 4, characterized in that the width of the said surface of linear form is not constant within a same pattern element (1).

6. Paper sheet according to one of Claims 1 to 5, characterized in that the distance separating a second protuberance (2) from a first protuberance (10) of a pattern element (1) is at least equal to the distance separating two adjacent second protuberances (2) of the second pattern.

7. Paper sheet according to one of Claims 1 to 6, characterized in that at least some of the second protuberances (2) situated close to a first protuberance (10) are arranged in at least one alignment (21) parallel to this first protuberance (10).

8. Paper sheet according to Claim 7, the pattern elements (1) of which define closed areas, characterized in that the said alignment (21) is situated within the pattern element.

9. Paper sheet according to one of the preceding claims, characterized in that the first protuberances (10) are provided on one face of the said sheet and the second protuberances (2) on the other face.

10. Laminated paper sheet, in particular for toilet paper, consisting of at least two plies (3,4) of absorbent crepe paper with a basis weight of between 12 and 25 g/m², each having on one face first and second protuberances (10,2) arranged according to a first and second pattern respectively, the said faces being turned towards the interior of the laminate, the first pattern being composed of pattern elements (1) which each consist of the said first protuberances (10) and are relatively far apart, and the second pattern, called the background pattern, comprising the said second protuberances (2) arranged closer together between the said pattern elements (1), characterized in that at least one of the plies is produced in accordance with one of Claims 1 to 9.

11. Laminated paper sheet according to Claim 10, characterized in that the height of the second protuberances (2) differs from that of the first protuberances (10), the height difference between them preferably remaining below 0.3 mm.

12. Laminated paper sheet according to Claim 11, characterized in that the height of the second protuberances (2) is less than that of the first protuberances (10).

13. Laminated paper sheet according to one of Claims 11 and 12, characterized in that the two plies (3 and 4) are joined together by adhesive bonding, via the summits of the first protuberances (10).

14. Laminated paper sheet according to one of Claims 10 to 13, characterized in that the height of the second protuberances (2) is less than 0.5 mm.

15. Laminated paper sheet, in particular for toilet paper, consisting of at least two plies of embossed absorbent crepe paper with a basis weight of between 12 and 25 g/m² placed one upon the other, each having on one face first and second protuberances, the said faces being turned towards the interior of the laminated sheet, arranged according to a first and second pattern respectively, the first pattern being composed of pattern elements which each consist of at least one of the said first protuberances and are relatively far apart, and the second pattern, called the background pattern, comprising the said second protuberances arranged closer together between the said pattern elements, characterized in that the pattern elements form a pattern called a graphic pattern by being distributed on the surface of the sheets in a concentration of at most 0.5 elements per cm², the first protuberances constituting them having at their summit a surface of linear form with a width of between 0.1 and 2 mm, and the second protuberances are arranged in a concentration of at least 30, preferably 40, per cm², and provide most of the functional features.
